# EUROPEAN PATENT SPECIFICATION

(11) **EP 3 787 958 B1**
(45) Date of publication and mention of the grant of the patent: **22.01.2025**
(21) Application number: 18917061.6
(22) Date of filing: 03.05.2018
(51) Int. Cl.: B62D 25/08

(54) **VEHICLE BODY WITH A REINFORCED REAR PILLAR**
FAHRZEUGKAROSSERIE MIT EINER VERSTÄRKTEN HINTEREN SÄULE
CARROSSERIE DE VÉHICULE DOTÉE D'UN MONTANT ARRIÈRE RENFORCÉ

(43) Date of publication of application: 10.03.2021
(73) Proprietor: Stellantis Auto SAS, 78300 Poissy (FR)
(72) Inventor: WANG, Yanran, Shanghai 200233 (CN); BARBIER, Matthieu, 75017 Paris (FR); ZHOU, Zhongxiang, Shanghai 200233 (CN); MA, Junxue, Shanghai (CN); LI, Bing, Shanghai 200031 (CN)
(74) Representative: BCIP
(86) International application number: PCT/CN2018/085460
(87) International publication number: WO 2019/210478

(56) References cited:
- EP-A2- 1 790 552
- CN-A- 1 605 523
- CN-A- 103 183 061
- CN-A- 104 554 450
- CN-A- 106 032 151
- CN-U- 202 225 924
- DE-A1- 10 348 354
- DE-A1- 10 348 354
- DE-A1- 102012 015 625
- DE-A1- 102012 019 936
- JP-A- 2016 112 991
- US-A1- 2005 073 174

## Description

The present invention relates to the body of an automotive vehicle, and more particularly to the torsional stiffness of the rear structure of the body.

The torsional stiffness is one of the key parameters of a vehicle design. When confronted to the driving conditions (road, curves, accelerations), the vehicle body should be sufficiently rigid in torsion to help the driving stability and ensure the security of the passengers. Thus, a vehicle with a high torsion rigidity gives the driver and the passenger a more "solid" feel when the vehicle is on the move, more particularly when the road is bumpy and uneven. Moreover, the interior of a vehicle with a high torsion rigidity, presents less rattling and popping noises when forces are transmitted to the chassis. The rigidity of the rear portion of the vehicle is of particular importance for maintaining a good behavior of the vehicle when impacts on the third pillar occur. To ensure this rigidity in torsion, reinforcing structures are thus implemented on each rear pillar inner panels of the vehicle and in particular at the location of the rear wheel housing.

The document EP 2 684 780 A1 discloses such a reinforcing structure. Two brackets are foreseen to connect the wheel housing to the fourth pillar (so called D-pillar) and to the third pillar (so called C-pillar), at a quite high position. This arrangement presents some drawbacks: firstly, such an arrangement is heavy and expensive to manufacture and to assemble; secondly, such an arrangement is not adapted to all vehicle bodies, depending on where the seat belt retractor or other organs are to be positioned.

From the prior art documents documents EP 1 790 552 A2, DE 10 2012 019936 A1, DE 10 2012 015625 A1, US 2005/073174 A1, DE 103 48 354 A1 are known.

The invention has for technical problem to overcome at least one of the drawbacks of the above cited prior art. More specially, the invention has for technical problem to provide a rear structure of a vehicle body that enables improvement in the stiffness and strength of the rear pillars without hindering the weight of the vehicle body.

For this purpose, the invention is directed to vehicle body comprising: a rear wheel housing; a L-shaped bracket in contact with the wheel housing; and a reinforcing bracket fixing the L-shaped bracket to the rear wheel housing, whereby the L-shaped bracket comprises a centering pin and the reinforcing bracket comprises a through-hole for receiving the centering pin of the L-shaped bracket. "Fixing" is to be understood as an assistance to maintain the L-shaped bracket to the rear wheel housing. Hence, the reinforcing bracket plays a role of connector or link between the L-shaped bracket and the wheel housing.

According to a preferred embodiment, the reinforcing bracket covers at least partially the L-shaped bracket.

According to a preferred embodiment, the through-hole is substantially square-shaped.

According to a preferred embodiment, the reinforcing bracket is welded to the L-shaped bracket and/or is welded to the wheel housing.

According to a preferred embodiment, the wheel housing comprises a beam portion extending upwardly and configured for supporting a rear seat back, the reinforcing bracket being mounted and attached to said beam portion.

According to a preferred embodiment, the reinforcing bracket comprises an arched edge delimiting two side surfaces.

According to a preferred embodiment, one of the two side surfaces comprises the through-hole and is preferably of a triangular shape.

According to a preferred embodiment, the other of the two side surfaces comprises a recess.

According to a preferred embodiment, wherein the reinforcing bracket is a stamped steel plate.

The invention is interesting in that it provides a vehicle body that particularly enables improvements in the torsion stiffness of rear pillars, in a simple and efficient manner. This invention is also interesting in that the reinforcing bracket enables the rear pillars to efficiently absorb forces associated with an impact. The arrangement of the invention is also easier to assemble.

Other features and advantages of the present invention will be readily understood from the following details description and drawings among which:
- Figure 1 shows a view of a rear portion of a vehicle body according to the invention;
- Figure 2 is a close-up view of figure 1;
- Figure 3 shows the reinforcing bracket alone.

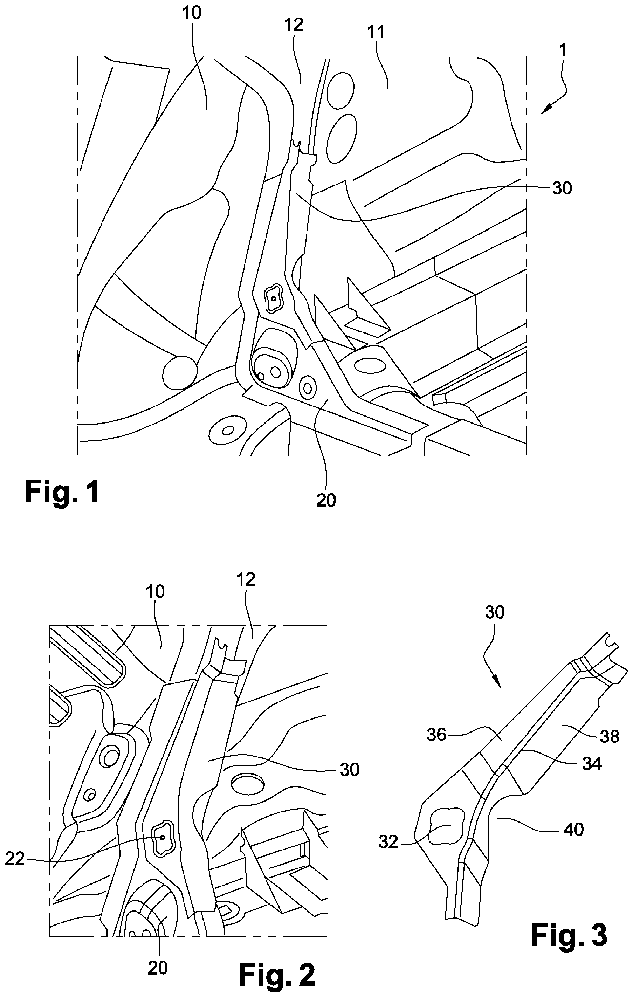

Figure 1 is a view of a rear portion of a vehicle body 1 according to the invention. This rear portion comprises a rear wheel housing 10, a rear pillar inner panel 11 extending upwardly from the rear wheel housing 10.

A beam portion 12 is foreseen on the wheel housing 10 to support the back of a rear seat. The beam portion 12 can be a substantially straight beam with a U-shape profile section.

An L-shape bracket 20 extends from the wheel housing to a transversal support beam of the vehicle body 1.

A reinforcing bracket 30 covers at least partially the L-shape bracket and is welded to both the wheel housing 10 and the L-shaped bracket 20.

Figure 2 shows a close-up illustration of figure 1, where the same numbers refer to the same parts of the car body. One can see that the L-shaped bracket 20 comprises a centering pin 22 to ease the assembling of the car body. The pin 22 cooperates with a through-hole (32 on figure 3) of the reinforcing bracket. The through-hole can be substantially square, potentially with curved corners. The pin can have a complementary shape to the through-hole. A mechanical coding can be foreseen to ease the mounting operation of the reinforcing bracket on the L-shaped bracket.

Figure 3 illustrates the reinforcing bracket 30 alone. The reinforcing bracket 30 may be a stamped steel plate. In this example, the through-hole 32 is of a substantially square shape with curved corners. A curved edge 34 delimits two side surfaces 36,38 of the bracket 30. A first surface 36 comprises the through-hole 32. This surface 36 is generally flat and has an approximately triangular shape. The other surface 38 comprises a recess 40 to help reducing the weight of the bracket without hindering its strength. The size of the recess 40 may be of importance for adjusting the rigidity of the bracket and therefore the rigidity in torsion of the car. The surface 38 can be comprised of two substantially rectangular portions separated by a recessed portion.

The skilled person would recognize that the reinforcing bracket 30 can be provided with further features that can help its mounting or attachment to the car body 1.

The present invention presents the advantage of increasing the stability of a rear pillar of vehicle body. In the present invention, the reinforcing bracket has for advantage to be a reinforcing element with a simple, light, and no-voluminous structure which effectively improves the torsion stiffness of the rear pillars in a reliable way and at low cost.

## Claims

1. Vehicle body (1) comprising:
- a rear wheel housing (10);
- a L-shaped bracket (20) in contact with the wheel housing; and
- a reinforcing bracket (30) fixing the L-shaped bracket to the rear wheel housing,
**characterized in that**
the L-shaped bracket comprises a centering pin and the reinforcing bracket comprises a through-hole for receiving the centering pin of the L-shaped bracket.

2. Vehicle body according to claim 1, wherein the reinforcing bracket covers at least partially the L-shaped bracket.

3. Vehicle body according to any of the preceding claims, wherein the through-hole is substantially square-shaped.

4. Vehicle body according to any of the preceding claims, wherein the reinforcing bracket is welded to the L-shaped bracket and/or is welded to the wheel housing.

5. Vehicle body according to any of the preceding claims, wherein the wheel housing comprises a beam portion extending upwardly and configured for supporting a rear seat back, the reinforcing bracket being mounted and attached to said beam portion.

6. Vehicle body according to any of the preceding claims, wherein the reinforcing bracket comprises an arched edge delimiting two side surfaces.

7. Vehicle body according to claim 2 and 6, wherein one of the two side surfaces comprises the through-hole and is preferably of a triangular shape.

8. Vehicle body according to claim7, wherein the other of the two side surfaces comprises a recess.

9. Vehicle body according to any of the preceding claims, wherein the reinforcing bracket is a stamped steel plate.

## Patentansprüche

1. Fahrzeugkarosserie (1) umfassend:
- ein hinteres Radgehäuse (10);
- eine L-förmige Halterung (20), die mit dem Radgehäuse in Kontakt steht; und
- eine Verstärkungshalterung (30), die die L-förmige Halterung am hinteren Radgehäuse befestigt, **dadurch gekennzeichnet, dass** die L-förmige Halterung einen Zentrierstift umfasst und die Verstärkungshalterung ein Durchgangsloch zur Aufnahme des Zentrierstifts der L-förmigen Halterung umfasst.

2. Fahrzeugkarosserie nach Anspruch 1, wobei die Verstärkungshalterung die L-förmige Halterung zumindest teilweise abdeckt.

3. Fahrzeugkarosserie nach einem der vorhergehenden Ansprüche, wobei das Durchgangsloch im Wesentlichen quadratisch ist.

4. Fahrzeugkarosserie nach einem der vorhergehenden Ansprüche, wobei die Verstärkungshalterung an die L-förmige Halterung geschweißt ist und/oder an das Radgehäuse geschweißt ist.

5. Fahrzeugkarosserie nach einem der vorhergehenden Ansprüche, wobei der Radkasten einen nach oben verlaufenden Trägerabschnitt umfasst, der zur Unterstützung einer Rücksitzlehne ausgebildet ist, wobei die Verstärkungshalterung an diesem Trägerabschnitt montiert und befestigt ist.

6. Fahrzeugkarosserie nach einem der vorhergehenden Ansprüche, wobei die Verstärkungshalterung eine gewölbte Kante umfasst, die zwei Seitenflächen begrenzt.

7. Fahrzeugkarosserie nach Anspruch 2 und 6, wobei eine der beiden Seitenflächen das Durchgangsloch umfasst und vorzugsweise dreieckig geformt ist.

8. Fahrzeugkarosserie nach Anspruch 7, wobei die andere der beiden Seitenflächen eine Aussparung umfasst.

9. Fahrzeugkarosserie nach einem der vorhergehenden Ansprüche, wobei die Verstärkungshalterung eine gestanzte Stahlplatte ist.

## Revendications

1. Carrosserie de véhicule (1) comprenant :
- un passage de roue arrière (10) ;
- un support en L (20) en contact avec le passage de roue ; et
- un support de renfort (30) fixant le support en L au passage de roue arrière, **caractérisée en ce que** le support en L comprend un axe de centrage et le support de renfort comprend un trou traversant pour recevoir l'axe de centrage du support en L.

2. Carrosserie de véhicule selon la revendication 1, dans laquelle le support de renfort recouvre au moins partiellement le support en L.

3. Carrosserie de véhicule selon l'une quelconque des revendications précédentes, dans laquelle le trou traversant est sensiblement de forme carrée.

4. Carrosserie de véhicule selon l'une quelconque des revendications précédentes, dans laquelle le support de renfort est soudé au support en L et/ou est soudé au passage de roue.

5. Carrosserie de véhicule selon l'une quelconque des revendications précédentes, dans laquelle le passage de roue comprend une partie poutre s'étendant vers le haut et configurée pour supporter un dossier de siège arrière, le support de renfort étant monté et fixé à ladite partie poutre.

6. Carrosserie de véhicule selon l'une quelconque des revendications précédentes, dans laquelle le support de renfort comprend un bord arqué délimitant deux surfaces latérales.

7. Carrosserie de véhicule selon les revendications 2 et 6, dans laquelle l'une des deux surfaces latérales comprend le trou traversant et est de préférence de forme triangulaire.

8. Carrosserie de véhicule selon la revendication 7, dans laquelle l'autre des deux surfaces latérales comprend un évidement.

9. Carrosserie de véhicule selon l'une quelconque des revendications précédentes, dans laquelle le support de renfort est une plaque d'acier emboutie.
